# EUROPÄISCHE PATENTSCHRIFT

(11) **EP 3 400 342 B1**
(45) Veröffentlichungstag und Bekanntmachung des Hinweises auf die Patenterteilung: **20.01.2021**
(21) Anmeldenummer: 16822178.6
(22) Anmeldetag: 23.12.2016
(51) Int. Cl.: E03D 1/32, E03C 1/02, E03D 1/012

(54) **VENTILARMATUR FÜR DIE BEFÜLLUNG EINES SANITÄREN SPÜLKASTENS UND SANITÄRER SPÜLKASTEN MIT EINER SOLCHEN VENTILARMATUR**
VALVE ARMATURE FOR THE FILLING OF A SANITARY CISTERN AND SANITARY CISTERN HAVING A VALVE ARMATURE OF THIS TYPE
ROBINETTERIE À SOUPAPE SERVANT À REMPLIR UN RÉSERVOIR DE CHASSE SANITAIRE ET RÉSERVOIR DE CHASSE SANITAIRE MUNI DE LADITE ROBINETTERIE À SOUPAPE

(30) Priorität: 07.01.2016 DE 202016000056 U
(43) Veröffentlichungstag der Anmeldung: 14.11.2018
(73) Patentinhaber: Viega Technology GmbH & Co. KG, 57439 Attendorn (DE)
(72) Erfinder: DIETERMANN, Patrick, 57368 Lennestadt (DE)
(74) Vertreter: Cohausz & Florack
(86) Internationale Anmeldenummer: PCT/EP2016/082532
(87) Internationale Veröffentlichungsnummer: WO 2017/118583

(56) Entgegenhaltungen:
- EP-A1- 1 956 152
- EP-A2- 1 172 490
- US-A1- 2015 122 342

## Beschreibung

Die Erfindung betrifft eine Ventilarmatur für die Befüllung eines sanitären Spülkastens, insbesondere Unterputzspülkastens, mit einem Anschlusselement zur Verbindung der Ventilarmatur mit einer Wasserversorgungsleitung, einem Absperrventil mit einem Betätigungselement zur manuellen Absperrung des Zuflusses von der Wasserversorgungsleitung und einem schwimmerbetätigten Füllventil, wobei das Anschlusselement, das Absperrventil und das Füllventil lösbar miteinander verbindbar sind, um eine Wasserstrecke zu bilden, so dass Wasser von der Wasserversorgungsleitung in den Innenraum des Spülkastens zuführbar ist, und wobei ein mit dem Füllventil verbundener Schwimmer durch einen ansteigenden Wasserspiegel im Spülkasten bewegbar ist und das Füllventil bei Erreichen eines vorgegebenen oder vorgebbaren Wasserpegels schließt und somit den Zufluss über die Wasserstrecke unterbricht, wobei das Betätigungselement des Absperrventils in Funktionsstellung des Schwimmers um eine im Wesentlichen horizontale Drehachse drehbar ist, wobei das Absperrventil so ausgeführt ist, dass es in mindestens zwei unterschiedlichen Lagen funktionsfähig in der Ventilarmatur einsetzbar ist, wobei das Anschlusselement in einer der Lagen an einer Öffnung in der linken Spülkastenseitenwand und in einer anderen der Lagen an einer Öffnung in der rechten Spülkastenseitenwand montierbar ist, und wobei das Betätigungselement in den mindestens zwei Lagen des Absperrventils jeweils in seiner Gebrauchsstellung von der Vorderseite der Ventilarmatur aus zugänglich ist. Des Weiteren betrifft die Erfindung einen sanitären Spülkasten mit einer solchen Ventilarmatur.

Derartige Ventilarmaturen für die Befüllung eines Spülkastens sind in verschiedenen Ausführungen bekannt. Sie werden auch als Wasserstrecke bezeichnet und umfassen typischerweise ein sogenanntes Füllventil, dessen Ventilkörper mittels eines Schwimmers betätigt wird. Der Schwimmer wird während der Befüllung des Spülkastens durch den ansteigenden Wasserpegel noch oben bewegt und wirkt dabei auf den Ventilkörper, welcher das Füllventil bei Erreichen eines bestimmten Wasserstandes schließt.

Eine solche Ventilanordnung ist beispielsweise aus der EP 2 481 856 A1 bekannt.

Bei kostengünstigen Ausführungen von sanitären Spülkästen werden oft relativ einfach ausgeführte Wasserstrecken (Füllventileinheiten) verwendet. Dabei sind die Komponenten der Wasserstrecke, vornehmlich biegestarre Kunststoffteile, in starrer Anordnung zueinander fest miteinander verbunden. Die Wasserstrecke ist somit auf eine bestimmte Positionierung der Wasserversorgungsleitung ausgelegt und nicht veränderbar. Durch spezielle Gegebenheiten auf der Baustelle kann es jedoch bei der Installation des Spülkastens notwendig oder gewünscht sein, die Wasserversorgungsleitung zum Spülkasten an dessen rechter Seite und nicht standardgemäß an dessen linker Seite anzubringen.

Aus der EP 1 932 973 B1 ist ein Unterputzspülkasten bekannt, der einen Kastenkörper und einen den Kastenkörper oberseitig verschließenden Spülkastendeckel aufweist, wobei im oberen Bereich der Seitenwand des Kastenkörpers eine Öffnung zur Aufnahme eines Wasseranschlusselements vorgesehen ist. Um eine einfache Montage des Wasseranschlusselements auch in schwierigen Einbausituationen zu ermöglichen, weist der Spülkastendeckel oberseitig eine Einbuchtung auf, in der eine weitere Öffnung zur Aufnahme eines Wasseranschlusselements ausgebildet ist, die mit einem abnehmbaren Verschluss versehen ist, mit dem die Öffnung in der Seitenwand des Kastenkörpers verschließbar ist, wenn das Wasseranschlusselement in der Öffnung des Spülkastendeckels montiert ist. Die Wasserstrecke für diesen Unterputzspülkasten weist einen flexiblen Füllschlauch auf, um das Füllventil je nach Einbausituation entweder an dem in der Öffnung der Seitenwand montierten Wasseranschlusselement oder an dem in der Öffnung des Spülkastendeckels montierten Wasseranschlusselement anschließen zu können. Üblicherweise ist die Wasserstrecke an der Öffnung der Spülkastenseitenwand vormontiert. Der Umbau für die Montage der Wasserstrecke an der oberseitigen Öffnung des Spülkastendeckels ist relativ aufwendig.

Die EP 1172 490 A2, die den nächstkommenden Stand der Technik darstellt, zeigt einen Wandeinbau-Spülkasten mit einem Kastenkörper, an dessen beiden Schmalseiten jeweils oben eine Anschlussöffnung zum Anschluss für zufließendes Spülwasser ausgebildet ist, während im Boden des Kastenkörpers ein Anschluss für den Ablauf zur Spülung einer Toilette vorgesehen ist. An einer der beiden an den Schmalseiten des Kastenkörpers ausgebildeten Anschlussöffnungen ist ein Absperrventil in Form eines Eckventils angeordnet. Das Eckventil ist über eine als Schlauch augebildete Verbindungsleitung an ein Füllventil angeschlossen.

Die EP 1 956 152 A1 zeigt ein schwimmergesteuertes Füllventil für einen Toilettenspülkasten. Der Schwimmer des Füllventils ist translatorisch entlang einer säulenförmigen Wasserzufuhrleitung bewegbar, wobei der Schwimmer durch einen Schwenkhebel mit einer Öffnungs- oder Schließeinheit des Füllventils verbunden ist. Der Schwimmer, der Schwenkhebel und die säulenförmigen Wasserzufuhrleitung sind relativ zu der Öffnungs- oder Schließeinheit um eine Drehachse drehbeweglich, die sich in vertikaler Richtung erstreckt.

Die US 2015/0122342 A1 offenbart verschiedene Sanitärarmaturen, insbesondere Sanitärventile, die einen Steckabschnitt und einen Buchsenabschnitt zur Aufnahme eines Steckteils aufweisen. Die Sanitärventile sind dabei als Eckventile oder lineare Ventile ausgebildet und weisen Anschlussadapter (Stecknippel) zum Anschluss von Kunststoff- oder Schlauchleitungen auf.

Davon ausgehend liegt der Erfindung die Aufgabe zugrunde, eine kostengünstige Ventilarmatur für die Befüllung eines sanitären Spülkastens, insbesondere Unterputzspülkastens, zu schaffen, die sich variabel von einer Einbauposition an einer Öffnung in der linken Spülkastenseitenwand in eine Einbauposition an einer Öffnung in der rechten Spülkastenseitenwand sowie umgekehrt einfach und relativ schnell umbauen lässt. Des Weiteren soll ein sanitärer Spülkasten für eine solche bzw. mit einer solchen Ventilarmatur geschaffen werden.

Diese Aufgabe wird durch eine Ventilarmatur mit den in Anspruch 1 angegebenen Merkmalen gelöst. Hinsichtlich des Spülkastens wird die Aufgabe durch die in Anspruch 11 angegebene Merkmalskombination gelöst. Bevorzugte und vorteilhafte Ausgestaltungen der erfindungsgemäßen Ventilarmatur bzw. des erfindungsgemäßen Spülkastens sind in den Unteransprüchen angegeben.

Die Erfindung basiert auf der Idee, das Absperrventil in seiner technischen Ausführung und seiner äußeren Geometrie so auszulegen, dass es in unterschiedlichen Lagen, vorzugsweise in einer ersten Lage und bei Bedarf in einer dazu um ca. 90° gedrehten zweiten Lage eingesetzt werden kann. Die Ventilarmatur (Wasserstrecke) ist damit im Wesentlichen spiegelsymmetrisch in einem Spülkasten, der zwei gegenüberliegende Öffnungen zur Aufnahme des Anschlusselements aufweist, einbaubar. Die Wasserversorgungsleitung lässt sich somit ohne aufwendigen Umbau sowie ohne einen flexiblen Füllschlauch variabel an dem Spülkasten anschließen.

Die erfindungsgemäße Ventilarmatur ist dadurch gekennzeichnet, dass das Füllventil über ein Rohrwinkelstück lösbar mit dem Absperrventil verbunden ist, wobei das Absperrventil durch Steckverbindungen mit dem Rohrwinkelstück und dem Anschlusselement lösbar verbunden ist, und wobei die jeweilige Steckverbindung mit einem Sicherungselement versehen ist.

Somit ergibt sich eine kostengünstige Ventilarmatur für die Befüllung eines sanitären Spülkastens, die sich variabel von einer Einbauposition an einer Öffnung in der linken Spülkastenseitenwand in eine Einbauposition an einer Öffnung in der rechten Spülkastenseitenwand und umgekehrt einfach und relativ schnell umbauen lässt.

Durch das Rohrwinkelstück wird der kostengünstige Einsatz eines herkömmlichen Füllventils in der erfindungsgemäßen Ventilarmatur vereinfacht. Insbesondere ermöglicht das Rohrwinkelstück eine besonders platzsparende Anordnung eines herkömmlichen Füllventils in dem Spülkasten. Vorzugsweise ist das Rohrwinkelstück mit dem Füllventil durch eine eine Überwurfmutter aufweisende Schraubverbindung lösbar verbunden. Hierdurch lässt sich auf einfache und zuverlässige Weise eine robuste, wasserdichte Wasserzufuhrleitungsverbindung realisieren.

Um die Ventilarmatur aus einer vormontierten Einbauposition besonders einfach und zuverlässig in die mindestens eine andere Einbauposition umbauen zu können, ist das Absperrventil durch Steckverbindungen mit dem Rohrwinkelstück und dem Anschlusselement lösbar verbunden, wobei die jeweilige Steckverbindung mit einem Sicherungselement, insbesondere einer Sicherungsklammer, versehen ist. Das jeweilige Sicherungselement ist dabei vorzugsweise von der Vorderseite des Absperrventils aus durch horizontales Drücken in eine Klemm- oder Raststellung bewegbar.

Eine bevorzugte Ausgestaltung der erfindungsgemäßen Ventilarmatur ist dadurch gekennzeichnet, dass dessen Absperrventil als Winkel-Eckventil mit zueinander im Winkel angeordneten Rohrstutzen ausgeführt ist. Diese Ausgestaltung bietet den Vorteil, das Füllventil raumsparend, mit geringem Abstand von der Innenseite der linken oder rechten Spülkastenseitenwand anordnen zu können, so dass in jeder der unterschiedlichen Einbaupositionen der Ventilarmatur ausreichend Platz für die Anordnung und Montage eines herkömmlichen Spülkasten-Ablaufventils bleibt. Eine Behinderung der Montage des Spülkasten-Ablaufventils lässt sich somit besonders zuverlässig ausschließen.

In diesem Zusammenhang sieht eine weitere vorteilhafte Ausgestaltung der erfindungsgemäßen Ventilarmatur vor, dass das Betätigungselement des Absperrventils hebelförmig ausgebildet ist, wobei die Hebellänge des Betätigungselements so bemessen ist, dass das frei abstehende Hebelende des Betätigungselements im geöffneten sowie im geschlossenen Zustand des Absperrventils dessen jeweiligen Rohrstutzen nicht überragt oder mit einem Abstand von weniger als 10 % der von der Drehachse aus gemessenen Hebellänge vor der Stirnfläche des Rohrstutzens endet. Hierdurch wird ein relativ langer Hebelarm erzielt und das Schließen sowie Öffnen des Absperrventils erheblich erleichtert, ohne dessen variable Anordnung zu beeinträchtigen.

Nach einer weiteren Ausgestaltung der erfindungsgemäßen Ventilarmatur verläuft die Drehachse des Betätigungselements im fertig montierten Zustand der Ventilarmatur quer zur Längsmittelachse des Anschlusselements. Hierdurch kann eine optimale Zugänglichkeit des Betätigungselements, insbesondere wenn dieses hebelförmig ausgebildet ist, in Bezug auf eine in der Vorderseite des Spülkastens, insbesondere Unterputzspülkastens, ausgebildete Revisionsöffnung erzielt werden.

Eine weitere vorteilhafte Ausgestaltung der erfindungsgemäßen Ventilarmatur ist dadurch gekennzeichnet, dass das Betätigungselement eine fensterartige Ausnehmung aufweist, die in Überdeckung mit dem Sicherungselement bringbar ist. Wenn das Betätigungselement, wie oben erwähnt, hebelförmig ausgebildet ist, ist die fensterartige Ausnehmung beispielsweise am freien Ende des Betätigungselements (Hebels) angeordnet. Die Sicherungselemente, die beispielsweise als Sicherungsklammern ausgeführt sind, weisen vorzugsweise eine unterschiedliche Farbe (z.B. rot und grün) auf, sodass der Installateur beim Umsetzen und Drehen des Absperrventils an die andere Spülkastenseite jeweils erkennt, ob das Absperrventil geöffnet (Betätigungselement in Überdeckung mit dem z.B. grünen Sicherungselement) oder geschlossen (Betätigungselement in Überdeckung mit dem z.B. roten Sicherungselement) ist.

Das Absperrventil der erfindungsgemäßen Ventilarmatur ist vorzugsweise als Kugelhahn, besonders bevorzugt als aus Kunststoff gefertigter Kugelhahn ausgeführt. Hierdurch lässt sich das Absperrventil mit relativ hohem Durchflussfaktor sowie in relativ kleinen Abmessungen realisieren. Zudem zeichnet sich ein Kugelhahn typischerweise durch eine hohe Dichtheit aus, wobei bei geschlossenem Kugelhahn aus dem Medium- bzw. Wasserdruck resultiert. Wenn das Absperrventil als aus Kunststoff gefertigter Kugelhahn ausgeführt ist, ergeben sich für die erfindungsgemäße Ventilarmatur weitere Kostenvorteile.

Nach einer weiteren bevorzugten Ausgestaltung der Erfindung weist das Betätigungselement an seinem drehbar mit dem Absperrventil verbundenen Abschnitt eine Aussparung auf, die in Bezug auf die Vorderseite der Ventilarmatur einen Rücksprung definiert. Das Absperrventil ist dabei vorzugsweise mit einem Anschlag versehen, der den Dreh- oder Schwenkbereich des Betätigungselements begrenzt, wobei die Aussparung eine Sicht auf den Anschlag freigibt. Die im Bereich des Sperrkörpers des Absperrventils angeordnete Aussparung begünstigt die Verwirklichung kompakter Abmessungen des Spülkastens; denn sie schafft Raum für die Anordnung einer anderen Komponente. Zudem bietet die Aussparung den Vorteil, dass der besagte Anschlag sichtbar wird und der Dreh- oder Schwenkbereich des Betätigungselements damit klar erkennbar ist.

Ein sanitärer Spülkasten, insbesondere Unterputzspülkasten, für die erfindungsgemäße Ventilarmatur ist vorzugsweise dergestalt ausgeführt, dass sowohl am oberen Ende der linken Spülkastenseitenwand als auch am oberen Ende der rechten Spülkastenseitenwand ein Absatz ausgebildet ist, der einen im Wesentlichen vertikalen Seitenwandabschnitt und eine quer dazu verlaufende Absatzfläche definiert, wobei der vertikale Seitenwandabschnitt mit einer Öffnung oder einer geschwächten Stelle zur Ausbildung einer Öffnung für die Aufnahme eines Anschlusselements versehen ist, und wobei das Füllventil im fertig montierten Zustand der Ventilarmatur unterhalb eines der beiden Absätze angeordnet ist, so dass sich die Absatzfläche des betreffenden Absatzes über das Füllventil erstreckt. Der jeweilige Absatz bildet einen Schutzbereich für die Verbindung von Anschlusselement und Wasserversorgungsleitung. Die im Bereich des Absatzes angeordnete Verbindung von Anschlusselement und Wasserversorgungsleitung kann so weitgehend vor ungewollten mechanischen Einwirkungen geschützt werden.

Eine bevorzugte Ausgestaltung des Spülkastens sieht vor, dass dessen Vorderseite auf Höhe der Absätze mit einer Revisionsöffnung versehen ist, die so angeordnet und dimensioniert ist, dass sie von der Vorderseite des Spülkastens aus betrachtet mit einem Innenraumbereich des Spülkastens fluchtet, in welchem sich zumindest teilweise das Betätigungselement des Absperrventils im fertig montierten Zustand der Ventilarmatur befindet. Das Betätigungselement des Absperrventils ist in diesem Fall sehr gut zugänglich.

Nachfolgend wird die Erfindung anhand einer ein Ausführungsbeispiel darstellenden Zeichnung näher erläutert. Es zeigen:
- Fig. 1: eine Vorderansicht einer Ventilarmatur (Wasserstrecke) mit einem Anschlusselement, einem Absperrventil, einem Rohrwinkelstück und einem schwimmerbetätigten Füllventil gemäß der vorliegenden Erfindung, wobei die Komponenten voneinander getrennt dargestellt sind;
- Fig. 2: einen Abschnitt eines Spülkastens in Vorderansicht mit der fertig montierten Ventilarmatur aus Fig. 1, wobei letztere an einer in der linken Spülkastenwand ausgebildeten Öffnung montiert ist;
- Fig. 3: eine Schnittansicht der Ventilarmatur entlang der horizontalen Schnittlinie B-B in Fig. 2;
- Fig. 4: eine perspektivische Ansicht von unten auf einen Abschnitt des Spülkastens aus Fig. 2 mit der montierten Ventilarmatur;
- Fig. 5: eine perspektivische Ansicht von oben auf einen Abschnitt des Spülkastens aus Fig. 2 mit der montierten Ventilarmatur; und
- Fig. 6: eine Vorderansicht eines oberen, hinteren Abschnitts eines erfindungsgemäßen Spülkastens, wobei zur Veranschaulichung der variablen Anordnung der erfindungsgemäßen Ventilarmatur dieselbe in zwei möglichen Montagelagen dargestellt und die Revisionsöffnung des Spülkastens durch eine strichpunktierte Linie angedeutet ist.

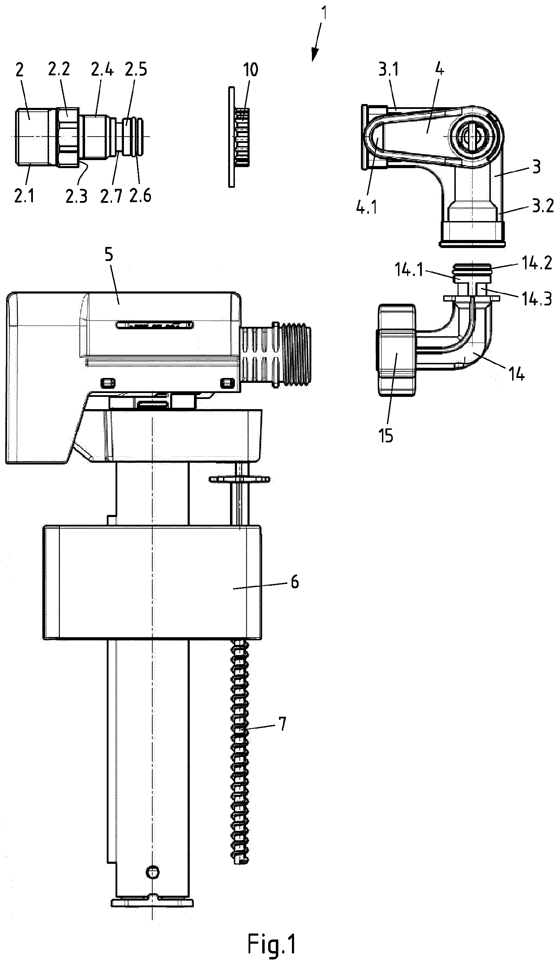

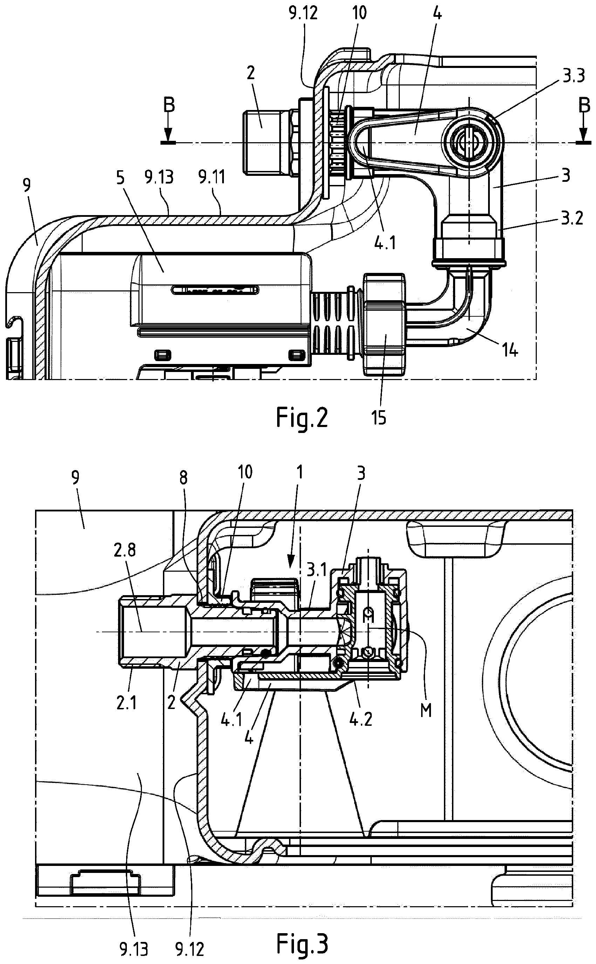

In Fig. 1 ist eine Explosionsdarstellung einer Ventilarmatur 1 für die Befüllung eines sanitären Spülkastens, insbesondere eines Unterputzspülkastens, für eine Toilette oder ein Urinal gezeigt. Die Ventilarmatur 1 kann auch als Wasserstrecke oder Wasserzufuhrkanal bezeichnet werden. In den Figuren 2 bis 6 sind die Komponenten der Wasserstrecke oder Ventilarmatur 1 im montierten Zustand darstellt.

Die Ventilarmatur 1 definiert eine Durchflussleitung, durch welche Wasser von einer Wasserversorgungsleitung (nicht gezeigt) in den Spülkasten zugeleitet werden kann. Die Ventilarmatur 1 umfasst ein Anschlusselement 2 zur Verbindung der Ventilarmatur 1 mit der Wasserversorgungsleitung, ein Absperrventil 3 mit einem Betätigungselement 4 zur manuellen Absperrung des Wasserzuflusses von der Wasserversorgungsleitung und ein schwimmerbetätigtes Füllventil 5. Der mit dem Ventilkörper des Füllventils 5 verbundene Schwimmer 6 wird durch einen ansteigenden Wasserspiegel im Spülkasten nach oben bewegt, wobei das Füllventil 5 bei Erreichen eines vorgegebenen oder vorgebbaren Wasserpegels schließt und somit den Zufluss über die Wasserstrecke unterbricht. Die gewünschte Wassermenge des Spülkastens ist stufenlos einstellbar und lässt sich durch Verdrehen einer Gewindestange 7 am Schwimmer 6 einstellen.

Das Anschlusselement 2 ist in Form eines Rohrstutzens ausgebildet. Es kann auch als Anschlussstutzen bezeichnet werden. Der Anschlussstutzen, d.h. das Anschlusselement 2 wird mit der Wasserversorgungsleitung kraftschlüssig verbunden. Vorzugsweise weist das Anschlusselement 2 hierzu an einem seiner Enden ein Außengewinde 2.1 auf, auf das eine einen gummielastischen Dichtring enthaltende Überwurfmutter (nicht gezeigt) aufgeschraubt werden kann. Beim Aufschrauben der Überwurfmutter wird der Dichtring axial zusammengepresst und dabei radial dichtend gegen den Außenumfang der Wasserversorgungsleitung gedrückt. Alternativ kann das Anschlusselement 2 auch einen muffenförmigen, plastisch umformbaren Abschnitt (nicht gezeigt) aufweisen, der innenseitig mit einer Ringnut zur Aufnahme eines gummielastischen Dichtrings versehen ist und auf die darin eingesteckte Wasserversorgungsleitung aufgepresst wird.

Neben dem Außengewinde 2.1 bzw. dem plastisch verformbaren Muffenabschnitt weist das Anschlusselement 2 einen als Mehrkant, beispielsweise als Sechskant, ausgebildeten Abschnitt 2.2 auf, der einen radialen Absatz oder Anschlag 2.3 zur axialen Festlegung des Anschlusselements 2 an einer Öffnung 8 des Spülkastens 9 definiert. An den Absatz oder Anschlag 2.3 schließt sich ein in die Öffnung 8 des Spülkastens 9 einsteckbarer Außengewindeabschnitt 2.4 an, auf den von innen zur Fixierung des Anschlusselements 2 eine Mutter 10, vorzugsweise eine Flanschmutter, aufgeschraubt wird.

Des Weiteren weist das Anschlusselement 2 einen Steckabschnitt 2.5 zum Aufstecken des Absperrventils 3 auf. Der Steckabschnitt 2.5 erstreckt sich von dem in die Spülkastenöffnung 8 einsteckbaren Außengewindeabschnitt 2.4 bis zu dem inneren Ende des Anschlusselements 2 und ist außenseitig mit mindestens einer Ringnut 2.6 zur Aufnahme eines Dichtrings versehen. Ferner ist der Steckabschnitt 2.5 außenseitig mit zwei parallel zueinander verlaufenden Quernuten oder einer Ringnut 2.7 versehen, die der Aufnahme von Abschnitten eines Sicherungselements 11, vorzugsweise einer Sicherungsklammer zur axialen Sicherung des aufgesteckten Absperrventils 3 dient bzw. dienen.

Das Betätigungselement 4 des Absperrventils 3 ist in Funktionsstellung des Schwimmers 6, d.h. in der bestimmungsgemäßen Montagestellung des Absperrventils 3 um eine im Wesentlichen horizontale Drehachse M drehbar. Das Absperrventil 3 ist in seiner Mechanik und seiner äußeren Geometrie so ausgeführt, dass es in unterschiedlichen Lagen in der Ventilarmatur (Wasserstrecke) 1 einsetzbar ist, wobei das Anschlusselement 2 in einer dieser Lagen an einer Öffnung 8 in der linken Spülkastenseitenwand 9.1 und in einer anderen der besagten unterschiedlichen Lagen an einer Öffnung 8' in der rechten Spülkastenseitenwand 9.2 montiert ist oder wird. Das Absperrventil 3 ist hierzu vorzugsweise als Winkel-Eckventil ausgeführt. Die beiden im Winkel zueinander angeordneten Rohrstutzen 3.1, 3.2 des Absperrventils 3 sind jeweils auf den Steckabschnitt 2.5 des Anschlusselements (Anschlussstutzens) 2 aufsteckbar und im aufgesteckten Zustand durch ein Sicherungselement 11, vorzugsweise eine Sicherungsklammer axial fixierbar.

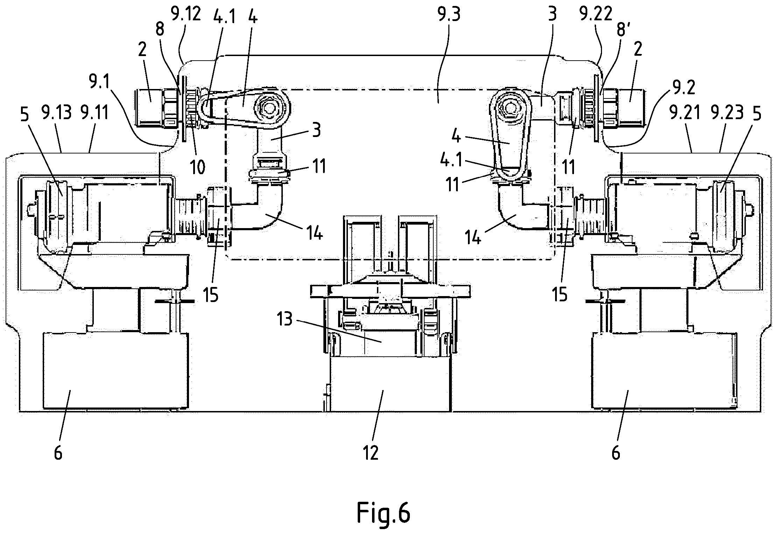

Ausgehend von der in den Figuren 2 bis 5 gezeigten Einbaulage kann das Absperrventil 3 somit durch Drehung um etwa 90° auch an einer Öffnung 8' in der rechten Spülkastenseitenwand 9.2 verwendet werden (vgl. Fig. 6). Das Betätigungselement 4 ist in jeder der in Fig. 6 dargestellten Lagen des Absperrventils 3 von der Vorderseite der Ventilarmatur 1 aus zugänglich. Die Drehachse M des Betätigungselements 4 verläuft im fertig montierten Zustand der Ventilarmatur 1 quer zur Längsmittelachse 2.8 des Anschlusselements 2.

In dem dargestellten Ausführungsbeispiel ist der Spülkasten 9 sowohl am oberen Ende der linken Spülkastenseitenwand 9.1 als auch am oberen Ende der rechten Spülkastenseitenwand 9.2 mit einem Absatz 9.11, 9.21 versehen, der einen im Wesentlichen vertikalen Seitenwandabschnitt 9.12, 9.22 und eine quer dazu verlaufende Absatzfläche 9.13, 9.23 definiert. Der vertikale Seitenwandabschnitt 9.12 weist im Lieferzustand des Spülkastens 9 eine Öffnung 8 oder 8' zur Aufnahme des Anschlusselements (Anschlussstutzens) 2 oder eine geschwächte Stelle zur Ausbildung einer solchen Öffnung 8, 8' auf.

Die Vorderseite des Spülkastens 9 ist auf Höhe der Absätze 9.11, 9.21 mit einer Revisionsöffnung 9.3 versehen, die so angeordnet und dimensioniert ist, dass sie von der Vorderseite des Spülkastens 9 aus betrachtet mit einem Innenraumbereich des Spülkastens 9 fluchtet, in welchem sich zumindest teilweise das Betätigungselement 4 des Absperrventils 3 im fertig montierten Zustand der Ventilarmatur 1 befindet (vgl. Fig. 6). Darüber hinaus ist der Spülkasten 9 vorzugsweise auch an seiner Oberseite mit einer Revisionsöffnung 9.4 versehen.

Das Betätigungselement 4 des Absperrventils 3 ist vorzugsweise hebelförmig ausgebildet. Die Hebellänge ist dabei so bemessen, dass das frei abstehende Hebelende des Betätigungselements 4 im geöffneten sowie im geschlossenen Zustand des Absperrventils 3 den jeweiligen Rohrstutzen der zueinander im Winkel angeordneten Rohrstutzen 3.1, 3.2 nicht überragt.

Das Betätigungselement 4 weist eine fensterartige Ausnehmung 4.1 auf, die in der Offenstellung bzw. Schließstellung des Absperrventils 3 in Überdeckung mit dem jeweiligen Sicherungselement 11 ist. Durch die Ausnehmung 4.1 hindurch ist das Sicherungselement 11 sichtbar. Die beiden Sicherungselements 11, die beispielsweise als Befestigungsklammern ausgeführt sind, weisen vorzugsweise unterschiedliche Farben auf. Beispielsweise ist das eine Sicherungselement 11 aus rotem Material gefertigt, während das andere Sicherungselement 11 aus grünem Material gefertigt ist. Ein Installateur erhält durch die unterschiedliche Farbgebung des Sicherungselements 11 einen deutlich und schnell wahrnehmbaren Hinweis auf den Zustand des Absperrventils 3, der vorliegt, wenn das Betätigungselement 4 mit dem einen oder anderen Sicherungselement 11 in Überdeckung ist. So kann beispielsweise das eine, z.B. rote Sicherungselement 11 für die Schließstellung des Absperrventils 3 stehen, während das andere, z.B. grüne Sicherungselement 11 für die Offenstellung des Absperrventils 3 steht.

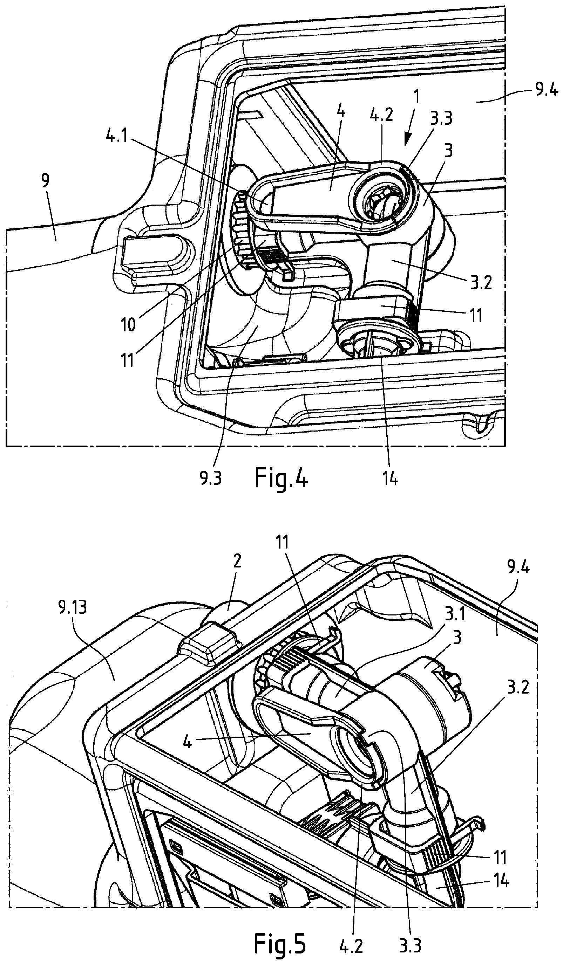

Des Weiteren ist insbesondere in den Figuren 4 und 5 zu erkennen, dass das Betätigungselement 4 im Bereich des Sperrkörpers des Absperrventils 3 eine Aussparung 4.2 aufweist. Das Betätigungselement 4 ist an seiner Vorderseite mit einem vorspringenden Steg versehen. Der Steg verläuft entlang des Umfangs des hebelförmigen Abschnitts des Betätigungselements 4 und ist somit im Wesentlichen U-förmig ausgebildet. Die Aussparung 4.2 definiert dagegen in Bezug auf die Vorderseite der Ventilarmatur 1 bzw. die Vorderseite des Betätigungselements 4 einen Rücksprung. Das Absperrventil 3 ist mit einem Anschlag 3.3 versehen, der den Drehbereich des Betätigungselements 4 begrenzt. Der Anschlag 3.3 bzw. der Schwenkbereich des Betätigungselements 4 ist aufgrund der Aussparung 4.2 sichtbar.

Mit 12 ist in Fig. 6 ein Ablaufventil bezeichnet, dessen als Überlaufrohr ausgebildeter Ventilkörper 13 über eine Betätigungsvorrichtung (nicht gezeigt) zur Auslösung eines Spülvorgangs, insbesondere einer Teil- oder Vollspülung, angehoben werden kann.

Das schwimmerbetätigte Füllventil 5 ist vorzugsweise über ein Rohrwinkelstück 14 lösbar mit dem Absperrventil 3 verbunden. Das Rohrwinkelstück 14 ist so bemessen, dass das Füllventil 5 im fertig montierten Zustand der Ventilarmatur 1 unterhalb eines der beiden Absätze 9.11, 9.21 des Spülkastens angeordnet ist, und zwar so, dass sich die Absatzfläche 9.13 oder 9.23 des betreffenden Absatzes über das Füllventil 5 erstreckt. Das Rohrwinkelstück 14 ist mit dem Füllventil 5 durch eine eine Überwurfmutter 15 aufweisende Schraubverbindung lösbar verbunden. Das Rohrwinkelstück 14 wird vorzugsweise außerhalb des Spülkastens 9 auf das Füllventil 5 aufgesteckt und mittels der Überwurfmutter 15 an einem Gewindestutzen des Füllventils 5 montiert. Das Füllventil 5 wird anschließend mit dem Rohrwinkelstück 14 im Spülkasten an der Unterseite des Absperrventils 3 in dessen im Wesentlichen vertikal verlaufenden Rohrstutzen 3.2 eingesteckt und durch ein Sicherungselement 11, vorzugsweise eine Sicherungsklammer fixiert. Das Rohrwinkelstück 14 weist hierzu an seinem dem Absperrventil 3 zugeordneten Einsteckende 14.1 eine Ringnut 14.2 zur Aufnahme eines Dichtrings sowie eine dazu axial beabstandete Ringnut 14.3 auf, wobei in letztere das eingesetzte Sicherungselement 11 formschlüssig eingreift.

Das Absperrventil 3 ist somit durch Steckverbindungen mit dem Rohrwinkelstück 14 und dem Anschlusselement 2 lösbar verbunden, wobei jede der Steckverbindungen mit einem Sicherungselement 11 versehen ist. Das jeweilige Sicherungselement 11 ist dabei von der Vorderseite des Absperrventils 3 aus durch horizontales Drücken in eine Klemm- oder Raststellung bewegbar.

Die Ausführung der Erfindung ist nicht auf das in der Zeichnung dargestellte Ausführungsbeispiel beschränkt. Vielmehr sind zahlreiche Varianten denkbar, die auch bei von dem gezeigten Beispiel abweichender Gestaltung von der in den beiliegenden Ansprüchen angegebenen Erfindung Gebrauch machen.

## Patentansprüche

1. Ventilarmatur (1) für die Befüllung eines sanitären Spülkastens (9), insbesondere Unterputzspülkastens, mit einem Anschlusselement (2) zur Verbindung der Ventilarmatur mit einer Wasserversorgungsleitung, einem Absperrventil (3) mit einem Betätigungselement (4) zur manuellen Absperrung des Zuflusses von der Wasserversorgungsleitung und einem schwimmerbetätigten Füllventil (5), wobei das Anschlusselement (2), das Absperrventil (3) und das Füllventil (5) lösbar miteinander verbindbar sind, um eine Wasserstrecke zu bilden, so dass Wasser von der Wasserversorgungsleitung in den Innenraum des Spülkastens (9) zuführbar ist, und wobei ein mit dem Füllventil (5) verbundener Schwimmer (6) durch einen ansteigenden Wasserspiegel im Spülkasten bewegbar ist und das Füllventil (5) bei Erreichen eines vorgegebenen oder vorgebbaren Wasserpegels schließt und somit den Zufluss über die Wasserstrecke unterbricht, wobei das Betätigungselement (4) des Absperrventils (3) in Funktionsstellung des Schwimmers (6) um eine im Wesentlichen horizontale Drehachse (M) drehbar ist, wobei das Absperrventil (3) so ausgeführt ist, dass es in mindestens zwei unterschiedlichen Lagen funktionsfähig in der Ventilarmatur (1) einsetzbar ist, wobei das Anschlusselement (2) in einer der Lagen an einer Öffnung (8) in einer linken Spülkastenseitenwand (9.1) und in einer anderen der Lagen an einer Öffnung (8') in einer rechten Spülkastenseitenwand (9.2) montierbar ist, und
wobei das Betätigungselement (4) in den mindestens zwei Lagen des Absperrventils (3) jeweils in seiner Gebrauchsstellung von der Vorderseite der Ventilarmatur (1) aus zugänglich ist, **dadurch gekennzeichnet, dass** das Füllventil (5) über ein Rohrwinkelstück (14) lösbar mit dem Absperrventil (3) verbunden ist, wobei das Absperrventil (3) durch Steckverbindungen mit dem Rohrwinkelstück (14) und dem Anschlusselement (2) lösbar verbunden ist, und wobei die jeweilige Steckverbindung mit einem Sicherungselement (11) versehen ist.

2. Ventilarmatur nach Anspruch 1, **dadurch gekennzeichnet, dass** das Absperrventil (3) als Winkel-Eckventil mit zueinander im Winkel angeordneten Rohrstutzen (3.1, 3.2) ausgeführt ist.

3. Ventilarmatur nach Anspruch 2, **dadurch gekennzeichnet, dass** das Betätigungselement (4) des Absperrventils (3) hebelförmig ausgebildet, wobei die Hebellänge des Betätigungselements (4) so bemessen ist, dass das frei abstehende Hebelende des Betätigungselements (4) im geöffneten sowie im geschlossenen Zustand des Absperrventils (3) den jeweiligen Rohrstutzen (3.1, 3.2) nicht überragt oder mit einem Abstand von weniger als 10 % der von der Drehachse (M) aus gemessenen Hebellänge vor der Stirnfläche des Rohrstutzens (3.1, 3.2) endet.

4. Ventilarmatur nach einem der Ansprüche 1 bis 3, **dadurch gekennzeichnet, dass** die Drehachse (M) des Betätigungselements (4) im fertig montierten Zustand der Ventilarmatur (1) quer zur Längsmittelachse (2.8) des Anschlusselements (2) verläuft.

5. Ventilarmatur nach einem der Ansprüche 1 bis 4, **dadurch gekennzeichnet, dass** das Rohrwinkelstück (14) mit dem Füllventil (3) durch eine eine Überwurfmutter (15) aufweisende Schraubverbindung lösbar verbunden ist.

6. Ventilarmatur nach einem der Ansprüche 1 bis 5, **dadurch gekennzeichnet, dass** das jeweilige Sicherungselement (11) von der in Gebrauchsstellung Vorderseite des Absperrventils (3) aus durch horizontales Drücken in eine Klemm- oder Raststellung bewegbar ist.

7. Ventilarmatur nach einem der Ansprüche 1 bis 6, **dadurch gekennzeichnet, dass** das Betätigungselement (4) eine fensterartige Ausnehmung (4.1) aufweist, die in Überdeckung mit dem Sicherungselement (11) bringbar ist.

8. Ventilarmatur nach einem der Ansprüche 1 bis 7, **dadurch gekennzeichnet, dass** das Absperrventil (3) als Kugelhahn ausgeführt ist.

9. Ventilarmatur nach einem der Ansprüche 1 bis 8, **dadurch gekennzeichnet, dass** das Betätigungselement (4) an seinem drehbar mit dem Absperrventil (3) verbundenen Abschnitt eine Aussparung (4.2) aufweist, die in Bezug auf die Vorderseite der Ventilarmatur (1) einen Rücksprung definiert.

10. Ventilarmatur nach Anspruch 9, **dadurch gekennzeichnet, dass** das Absperrventil (3) mit einem Anschlag (3.3) versehen ist, der den Drehbereich des Betätigungselements (4) begrenzt, wobei die Aussparung (4.2) eine Sicht auf den Anschlag (3.3) freigibt.

11. Sanitärer Spülkasten (9), insbesondere Unterputzspülkasten, mit einer linken Spülkastenseitenwand (9.1), einer rechten Spülkastenseitenwand (9.2) und einer Ventilarmatur (1) gemäß einem der Ansprüche 1 bis 10, **dadurch gekennzeichnet, dass** sowohl am oberen Ende der linken Spülkastenseitenwand (9.1) als auch am oberen Ende der rechten Spülkastenseitenwand (9.2) ein Absatz (9.11, 9.21) ausgebildet ist, der einen im Wesentlichen vertikalen Seitenwandabschnitt (9.12, 9.22) und eine quer dazu verlaufende Absatzfläche (9.13, 9.23) definiert, wobei der vertikale Seitenwandabschnitt (9.12, 9.22) mit einer Öffnung (8, 8') oder einer geschwächten Stelle zur Ausbildung einer Öffnung (8, 8') versehen ist, und wobei das Füllventil (5) im fertig montierten Zustand der Ventilarmatur (1) unterhalb eines der beiden Absätze (9.11, 9.21) angeordnet ist, so dass sich die Absatzfläche (9.13, 9.23) des betreffenden Absatzes (9.11, 9.21) über das Füllventil (5) erstreckt.

12. Spülkasten nach Anspruch 11, **dadurch gekennzeichnet, dass** dessen Vorderseite auf Höhe der Absätze (9.11, 9.21) mit einer Revisionsöffnung (9.3) versehen ist, die so angeordnet und dimensioniert ist, dass sie von der Vorderseite des Spülkastens (9) aus betrachtet mit einem Innenraumbereich des Spülkastens (9) fluchtet, in welchem sich zumindest teilweise das Betätigungselement (4) des Absperrventils (3) im fertig montierten Zustand der Ventilarmatur (1) befindet.

## Claims

1. Valve fitting (1) for filling a sanitary cistern (9), in particular a concealed cistern, with a connecting element (2) for connecting the valve fitting to a water supply line, a shut-off valve (3) with an actuating element (4) for manually shutting off the inflow from the water supply line and a float-operated filling valve (5), wherein the connecting element (2), the shut-off valve (3) and the filling valve (5) can be detachably connected to each other to form a water path so that water can be supplied from the water supply line into the interior of the cistern (9), and wherein a float (6) connected to the filling valve (5) can be moved by a rising water level in the cistern and the filling valve (5) closes when a predetermined or predeterminable water level is reached and thus interrupts the inflow via the water path, wherein the actuating element (4) of the shut-off valve (3) is rotatable about a substantially horizontal axis of rotation (M) in the functional position of the float (6), wherein the shut-off valve (3) is designed to be functionally insertable in the valve fitting (1) in at least two different positions, wherein the connecting element (2) is connected in one of the positions to an opening (8) in a left cistern side wall (9. 1) and in another of the positions at an opening (8') in a right cistern side wall (9. 2), and wherein the actuating element (4) in the at least two positions of the shut-off valve (3) is accessible from the front side of the valve fitting (1) in its position of use in each case, **characterised in that in that** the filling valve (5) is detachably connected to the shut-off valve (3) via a pipe angle piece (14), the shut-off valve (3) being detachably connected to the pipe angle piece (14) and the connecting element (2) by means of plug connections, and the respective plug connection being provided with a securing element (11).

2. Valve fitting according to claim 1, **characterised in that** the shut-off valve (3) is designed as an angle-corner valve with pipe sockets (3.1, 3.2) arranged at an angle to one another.

3. Valve fitting according to claim 2, **characterised in that** the actuating element (4) of the shut-off valve (3) is lever-shaped, wherein the lever length of the actuating element (4) is dimensioned such that the freely projecting lever end of the actuating element (4) supports the respective pipe socket (3.1, 3.2) in the open and in the closed state of the shut-off valve (3). 1, 3.2) or ends in front of the end face of the pipe socket (3.1, 3.2) at a distance of less than 10 % of the lever length measured from the axis of rotation (M).

4. Valve fitting according to one of claims 1 to 3, **characterised in that** the axis of rotation (M) of the actuating element (4) in the completely assembled state of the valve fitting (1) extends transversely to the longitudinal central axis (2.8) of the connecting element (2).

5. Valve fitting according to one of claims 1 to 4, **characterised in that** the pipe angle piece (14) is detachably connected to the filling valve (3) by a screw connection having a union nut (15).

6. Valve fitting according to one of the claims 1 to 5, **characterised in that** the respective securing element (11) can be moved from the front side of the shut-off valve (3) in the position of use into a clamping or latching position by horizontal pressing.

7. Valve fitting according to one of the claims 1 to 6, **characterised in that** the actuating element (4) has a window-like recess (4.1) which can be brought to overlap with the securing element (11).

8. Valve fitting according to one of the claims 1 to 7, **characterised in that** the shut-off valve (3) is designed as a ball valve.

9. Valve fitting according to one of the claims 1 to 8, **characterised in that** the actuating element (4) has a recess (4.2) on its section rotatably connected to the shut-off valve (3), which recess defines a recess with respect to the front side of the valve fitting (1).

10. Valve fitting according to claim 9, **characterised in that** the shut-off valve (3) is provided with a stop (3.3) which limits the range of rotation of the actuating element (4), the recess (4.2) allowing a view of the stop (3.3).

11. Sanitary cistern (9), in particular concealed cistern, with a left cistern side wall (9.1), a right cistern side wall (9.2) and a valve fitting (1) according to one of claims 1 to 10, **characterised in that** both the upper end of the left cistern side wall (9.1) as well as at the upper end of the right cistern side wall (9.2) a shoulder (9.11, 9.21) is formed, which has a substantially vertical side wall section (9.12, 9.22) and a shoulder surface (9.13, 9.23) extending transversely thereto, wherein the vertical side wall section (9.12, 9.22) is provided with an opening (8, 8') or a weakened point for forming an opening (8, 8'), and wherein the filling valve (5) is located below one of the two shoulders (9.11, 9.21) so that the shoulder surface (9.13, 9.23) of the relevant shoulder (9.11, 9.21) extends over the filling valve (5).

12. Flushing cistern according to claim 11, **characterised in that** its front side is provided at the level of the shoulders (9.11, 9.21) with an inspection opening (9.3) which is arranged and dimensioned in such a way that, viewed from the front side of the flushing cistern (9), it is aligned with an interior region of the flushing cistern (9) in which the actuating element (4) of the shut-off valve (3) is located at least partially in the completely assembled state of the valve fitting (1).

## Revendications

1. Robinetterie de soupape (1) pour le remplissage d'un réservoir de chasse sanitaire (9), en particulier d'un réservoir de chasse encastré, avec un élément de raccordement (2) pour le raccordement de la robinetterie de soupape à une conduite d'alimentation en eau, avec une soupape d'arrêt (3) ayant un élément d'actionnement (4) pour la fermeture manuelle de l'arrivée de la conduite d'alimentation en eau, et avec une soupape de remplissage (5) à actionnement par flotteur, où l'élément de raccordement (2), la soupape d'arrêt (3) et la soupape de remplissage (5) peuvent être reliés entre eux de manière amovible pour former un chemin d'eau, de sorte que l'eau puisse être amenée de la conduite d'alimentation en eau à l'intérieur du réservoir de chasse (9), et où un flotteur (6) relié à la soupape de remplissage (5) peut être déplacé par un niveau d'eau croissant dans le réservoir de chasse et la soupape de remplissage (5) se ferme lorsqu'un niveau d'eau prédéterminé ou pouvant être prédéterminé est atteint et interrompt ainsi l'arrivée par le chemin de l'eau, où l'élément d'actionnement (4) de la soupape d'arrêt (3) peut, en position fonctionnelle du flotteur (6), tourner autour d'un axe de rotation (M) essentiellement horizontal, où la soupape d'arrêt (3) est conçue de telle manière à pouvoir être insérée, en état opérationnel, dans la robinetterie de soupape (1) dans au moins deux positions différentes, où l'élément de raccordement (2) peut être monté dans une des positions à une ouverture (8) dans une paroi latérale gauche (9.1) du réservoir de chasse et dans une autre des positions à une ouverture (8') dans une paroi latérale droite (9.2) du réservoir de chasse, et où l'élément d'actionnement (4) est accessible dans sa position d'utilisation depuis la face avant de la robinetterie de soupape (1) dans les au moins deux positions de la soupape d'arrêt (3), **caractérisée en ce que** la soupape de remplissage (5) est reliée de manière amovible à la soupape d'arrêt (3) par l'intermédiaire d'un pièce de tuyau d'angle (14), où la soupape d'arrêt (3) est reliée de manière amovible à la pièce de tuyau d'angle (14) et à l'élément de raccordement (2) au moyen de connexions enfichables, et où chaque connexion enfichable est pourvue d'un élément de sécurité (11).

2. Robinetterie de soupape selon la revendication 1, **caractérisée en ce que** la soupape d'arrêt (3) est conçue comme une soupape d'angle à passage équerre avec des manchons de tuyaux (3.1, 3.2) disposés en angle les uns par rapport aux autres.

3. Robinetterie de soupape selon la revendication 2, **caractérisée en ce que** l'élément d'actionnement (4) de la soupape d'arrêt (3) est réalisé sous la forme d'un levier, où la longueur de levier de l'élément d'actionnement (4) est dimensionnée de telle manière à ce que l'extrémité de levier de l'élément d'actionnement (4) faisant saillie librement ne surplombe pas, à l'état ouvert comme à l'état fermé de la soupape d'arrêt (3), le manchon tubulaire de tuyau (3.1, 3.2) ou se termine devant la face frontale du manchon de tuyau (3.1, 3.2) à une distance inférieure à 10% de la longueur de levier mesurée à partir de l'axe de rotation (M).

4. Robinetterie de soupape selon l'une des revendications 1 à 3, **caractérisée en ce que** l'axe de rotation (M) de l'élément d'actionnement (4), à l'état complètement monté de la robinetterie de soupape (1), s'étend transversalement par rapport à l'axe central longitudinal (2.8) de l'élément de raccordement (2).

5. Robinetterie de soupape selon l'une des revendications 1 à 4, **caractérisée en ce que** la pièce de tuyau d'angle (14) est reliée de manière amovible à la soupape de remplissage (3) par une connexion à vis comportant un écrou de raccordement (15).

6. Robinetterie de soupape selon l'une des revendications 1 à 5, **caractérisée en ce que** l'élément de sécurité (11) respectif peut être déplacé, à partir de la face avant de la soupape d'arrêt (3) en position d'utilisation, au moyen d'une pression horizontale vers une position de serrage ou de verrouillage.

7. Robinetterie de soupape selon l'une des revendications 1 à 6, **caractérisée en ce que** l'élément d'actionnement (4) présente un évidement en forme de fenêtre (4.1), lequel évidement peut être amené en chevauchement avec l'élément de sécurité (11).

8. Robinetterie de soupape selon l'une des revendications 1 à 7, **caractérisée en ce que** la soupape d'arrêt (3) est conçue comme un robinet à bille.

9. Robinetterie de soupape selon l'une des revendications 1 à 8, **caractérisée en ce que** l'élément d'actionnement (4) présente, sur sa partie reliée de manière rotative à la soupape d'arrêt (3), un évidement (4.2) qui définit un décrochement par rapport à la face avant de la robinetterie de soupape (1).

10. Robinetterie de soupape selon la revendication 9, **caractérisée en ce que** la soupape d'arrêt (3) est pourvue d'une butée (3.3) qui limite la plage de rotation de l'élément d'actionnement (4), où l'évidement (4.2) permet de voir la butée (3.3).

11. Réservoir de chasse sanitaire (9), en particulier réservoir de chasse encastré, avec une paroi latérale gauche de réservoir de chasse (9.1), avec une paroi latérale droite de réservoir de chasse (9.2) et avec une robinetterie de soupape (1) selon l'une des revendications 1 à 10, **caractérisé en ce qu'**aussi bien à l'extrémité supérieure de la paroi latérale gauche de réservoir de chasse (9. 1) qu'à l'extrémité supérieure de la paroi latérale droite de réservoir de chasse (9.2), un épaulement (9.11, 9.21) est formé, lequel épaulement définit une section de paroi latérale essentiellement verticale (9.12, 9. 22) et une surface d'épaulement (9.13, 9.23) s'étendant transversalement à celle-ci, où la partie verticale de la paroi latérale (9.12,9.22) est pourvue d'une ouverture (8, 8') ou d'un point affaibli pour former une ouverture (8, 8'), et où la soupape de remplissage (5), en état entièrement monté de la robinetterie de soupape (1), est disposée sous l'un des deux épaulements (9. 11, 9.21), de telle manière à ce que la surface d'épaulement (9.13, 9.23) de l'épaulement concerné (9.11, 9.21) s'étende au-dessus de la soupape de remplissage (5).

12. Réservoir de chasse selon la revendication 11, **caractérisé en ce que** sa face avant est pourvue, à la hauteur des épaulements (9.11, 9.21), d'une ouverture d'inspection (9.3), laquelle ouverture d'inspection est disposée et dimensionnée de manière à ce que, vue de la face avant du réservoir de chasse d'eau (9), elle soit alignée avec une zone intérieure du réservoir de chasse d'eau (9) dans laquelle se trouve l'élément d'actionnement (4) de la soupape d'arrêt (3) au moins partiellement lorsque la robinetterie de soupape (1) est complètement montée.
